# EUROPEAN PATENT SPECIFICATION

(11) **EP 2 465 664 B1**
(45) Date of publication and mention of the grant of the patent: **13.11.2013**
(21) Application number: 11194507.7
(22) Date of filing: 20.12.2011
(51) Int. Cl.: B29C 51/26, B29C 51/08

(54) **Mobile-plate assembly for a thermoforming station**
Mobilplattenanordnung für eine Thermoformungsstation
Ensemble formant plaque mobile pour une station de thermoformage

(30) Priority: 20.12.2010 IT MI20102323
(43) Date of publication of application: 20.06.2012
(73) Proprietor: Forma S.r.l., 20014 Nerviano (IT)
(72) Inventor: Fiorentini, Francesco, 20014 Nerviano (IT)
(74) Representative: Coloberti, Luigi

(56) References cited:
- EP-A1- 0 692 365
- EP-A1- 0 882 566
- US-A- 5 167 969

## Description

### BACKGROUND OF THE INVENTION

The present invention relates to a mobile-plate assembly which is suitable to provide an adjustable reduction window for holding or supporting sheets of different sizes of thermoplastic material in a thermoforming station, wherein the holding plates are slidably supported in planes parallel to the longitudinal and cross edges of the window, in order to adjust the opening thereof according to the size of the sheets of thermoplastic material to be thermoformed, by holding the latter in a working position that can be easily accessed by an operator.

The invention also relates to a mobile-plate assembly as described above, in combination with a clamping frame provided with sheet members, and/or in combination with a mould support table for a thermoforming mould, provided with an adjustable positioning system for a pneumatic device conformed and arranged for connecting the mould to an air suction source and/or to a pressurised air source.

### PRIOR ART

Mobile-plate assemblies for adjustable reduction windows suitable for supporting sheets of thermoplastic material of different sizes in thermoforming stations have been widely used and well-known, for example from US 5167969, EP-A-0692365, EP-A-0882566 and EP-A-1876011.

In particular, US5167969 discloses an auxiliary double frame for a rotary vacuum mold unit. The double frame has a center auxiliary frame member and one or more auxiliary transverse frame members for carrying plastic sheet workpieces.

Particularly, EP-A-0692365 discloses an assembly of four support plates for thermoplastic sheets, in which the plates are coplanary arranged and removably supported to each other, both in the longitudinal and cross directions of the window, such that the opening of the window at the adjustment of its dimensions, remains in a central position, axially aligned to an underlying thermoforming mould.

The four plates have dovetail-shaped ribs and slots, along two orthogonal edges, both for guiding the sliding movement thereof, and for allowing their mechanical connection as required.

A similar plate assembly, which has been a market standard for some time, however, has considerable limitations and drawbacks, both from structural and functional points of view.

Particularly, as a thermoforming station operates in a high-temperature environment, in the presence of dirt, the use of a dovetail-type guide system, due to the dirt and the inevitable thermal expansion, can cause the plates to be jammed thereby compromising the reliability of the same guide system, as well as the vacuum tightness.

Besides the drawbacks mentioned above, and the requirement of moving all the plates simultaneously in two orthogonal directions, which results in a greater overall dimension, said plate assembly also has limited adjustment ranges for adjusting the window, with a consequent requirement of providing several variously-sized plate assemblies, according to the sizes of the sheets of plastic material to be thermoformed; this implies costly operations and time consumption for replacing one plate assembly with another one, as well as hazards for operators, in addition to an increased cost resulting from the necessity to dispose of several assemblies for a same thermoforming station.

EP-A-0882566 and EP-A-1876011, in turn, show plate assemblies that are extremely complicated, comprising four or more movable plates arranged in overlapped planes, wherein the window opening remains steady in a central position as the mould size is changed, which position is comparatively far from and difficult to access by an operator.

### OBJECTS OF THE INVENTION

An object of the present invention is to provide a mobile-plate assembly, for an adjustable reduction window suitable for supporting sheets of thermoplastic material of different sizes, in a working station of a thermoforming machine, which is structurally simple and comparatively less expensive than the currently available plate assemblies, which requires a simplified tooling set, while allowing for a wide adjustment range.

A further object of the invention is to provide a mobile-plate assembly as defined above, wherein the rear edge of the window for supporting the plastic sheets to be thermoformed, can be progressively moved forward close to the front side, as the size thereof is reduced, and wherein the front edge of the window results to be in a steady position close to the front edge.

Thereby, a solution is achieved which is provided with a great working flexibility in adjusting the window size, which can vary from an open wide to a completely closed condition, providing ergonomic working conditions for an operator at all times.

A further object of the invention is to provide a universal plate assembly, which is compatible with existing mould for a large number of thermoforming machines, by means of which the thickness and weight of the plates can be considerably reduced, while maintaining a high flexural rigidity, in order to securely hold the thermoplastic sheets to be worked.

A further object of the invention is to provide a plate assembly wherein each sheet holding plate is movable along one axis only, and wherein the window size can be widely changed by simply replacing one or a reduced number components of the assembly, while the whole plate assembly and the operative connections to control members remain unchanged.

A further object is to provide a plate assembly, in combination with a sheet-clamping frame, which are suitably configured to allow for an easy clamp of the plastic sheets and/or the thermoformed pieces, which does not require particular mechanical processing and costly intervention by a user, upon any adjustment.

Another object of the invention is to provide a plate assembly for an adjustable reduction window suitable for holding sheets of thermoformable plastic material of different sizes, as defined above, in combination with a mould support table suitable to support different types of thermoforming moulds in different working positions, as well as provided with a connection device for selectively connecting a mould to an air suction source and/or to a pressurized air source, the positioning thereof being suitably adjustable in respect to the position of the mould on the support table.

### BRIEF DESCRIPTION OF THE INVENTION

These and further objects and advantages of the invention can be achieved by a mobile plate assembly for an adjustable reduction window according to claim 1, suitable for holding thermoformable plastic sheets of different sizes either individually or in combination with a sheet-clamping frame provided with a clamping system for retaining the plastic sheets and/or the thermoformed plastic pieces according to claim 8 or, in combination with a support table for a thermoforming mould, provided with an adjustable connection device for selectively connecting the mould to an air suction source and/or to a pressurized air source according to claim 9.

More properly, according to the invention, a mobile plate assembly has been provided suitable to form an adjustable reduction window for supporting sheets of thermoformable plastic material of different sizes in a thermoforming station, in which the window comprises a front edge and a rear edge which extend parallel to a longitudinal direction; and
two cross edges which extend at a right-angled direction to the previous one, characterised by including:
a first steady bar member which extends parallel to the front edge of the window;
first and second side plates, said side plates being slidably supported in the longitudinal direction of the window, coplanar to the steady front bar member; and
a rear plate slidably supported in the cross direction, on a plane parallel to the side plates, in which the rear plate is provided with a second bar member which extends parallel to the rear edge of the window; and
in which the rear bar number is removably connected to the rear plate, coplanar to the front bar member and to the side plates.

For the scope of the present invention the term "sheet" means a rigid or semi-rigid sheet of a thermoformable plastic material, having a thickness ranging between 0,3 - 1,5 mm or greater.

### BRIEF DESCRIPTION OF THE DRAWINGS

The plate assembly according to the invention and an application of the same in a thermoforming station will be described in greater detail herein below with reference to the example of the annexed drawings, wherein:
Fig. 1 is a perspective view of a mould housing box of a thermoforming station, comprising a mobile plate assembly according to the present invention;
Fig. 2 is a longitudinal sectional view, according to the line 2-2 in Fig. 1;
Fig. 3 is a diagram showing several characteristics of the plate assembly in Fig. 1;
Fig. 4 is a longitudinal sectional view of a detail of figure 3;
Fig. 5 is an enlarged detail, according to the section line 5-5 in Fig. 1, of the rear plate in combination with a sheet-clamping frame comprising a sheet clamping device according to the invention;
Fig. 6 shows an enlarged detail according to the section line 6-6 in Fig. 1, in combination with a sheet-clamping frame comprising a sheet clamping device according to the invention;
Fig. 7 is a view according to line 7-7 in Fig. 6;
Fig. 8 is a top view of the mould support table, according to the present invention;
Fig. 9 is a longitudinal sectional view according to line 9-9 in Fig. 8;
Fig. 10 is a cross-sectional view according to line 10-10 in Fig. 8.

### DESCRIPTION OF THE INVENTION

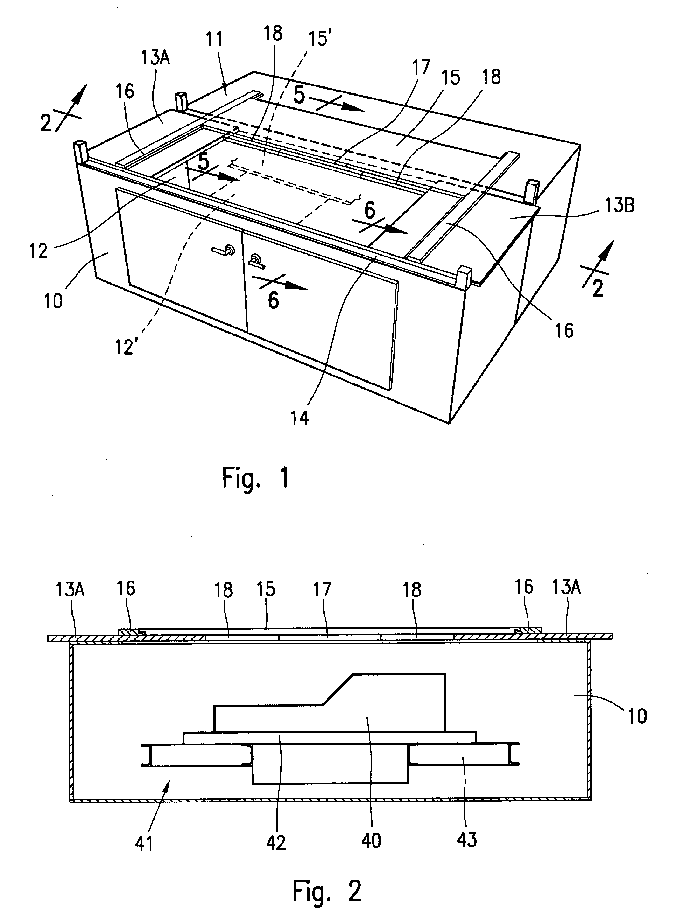

Fig. 1 shows a perspective view, while Fig. 2 shows a sectional view of a box 10 for housing a mould support table, which forms part of a work station for thermoforming sheets of thermoplastic material, wherein the housing box 10 is provided with a covering plate assembly 11 according to the present invention suitable to provide an opening of an adjustable reduction window 12 for supporting sheets of thermoformable plastic material of various sizes.

As shown in figure 1, the window 12 comprises front and rear edges which extend parallel to a longitudinal direction of the window 12, and two cross edges which extend at a right-angled direction to said front and rear edges.

The plate assembly 11 comprises a first steady bar member 14 which extends parallel to the front edge of the window 12, first and second side plates 13A, 13B, which are slidably supported in a longitudinal direction of the window, coplanar to the steady front bar member 14 and a rear plate 15 slidably supported in the cross direction of the window 12, said rear plate 15 being arranged in a parallel plane lying above the sliding plane of the two slide plates 13A and 13B.

The three mobile plates 13A, 13B, 15 and the front steady bar member 14 generally define the peripheral edges of a rectangular opening of the window 12, which by a controlled sliding movement of the same plates can be changed between a maximum opening shown by the reference number 12 in Fig. 1, and a minimum opening shown with a dotted line and by the reference number 12', keeping a steady position of the front bar member 14 defining the front edge of the window 12.

Accordingly, Fig. 1 shows a first distinguishing characteristic of the plate assembly according to the present invention; while with conventional plate systems in which all the plates are sliding along the four sides of the window, the space between the front side of the box 10, or operator side, and the longitudinal front edge of the window 12, changes as the size of the window is changed, by the plate assembly according to the invention the space between the front side of the box 10 and the longitudinal front edge of the window 12 remains always unchanged, equal to the minimum width of the front steady bar member 14, independently of the window size. In addition, as the size of the window 12 is reduced due to the forward sliding movement of the rear plate, as indicated by the dotted line 15', the rear longitudinal edge progressively moves close to the front edge of the window as defined by the steady bar member 14, while maintaining the highest ergonomic working condition for an operator.

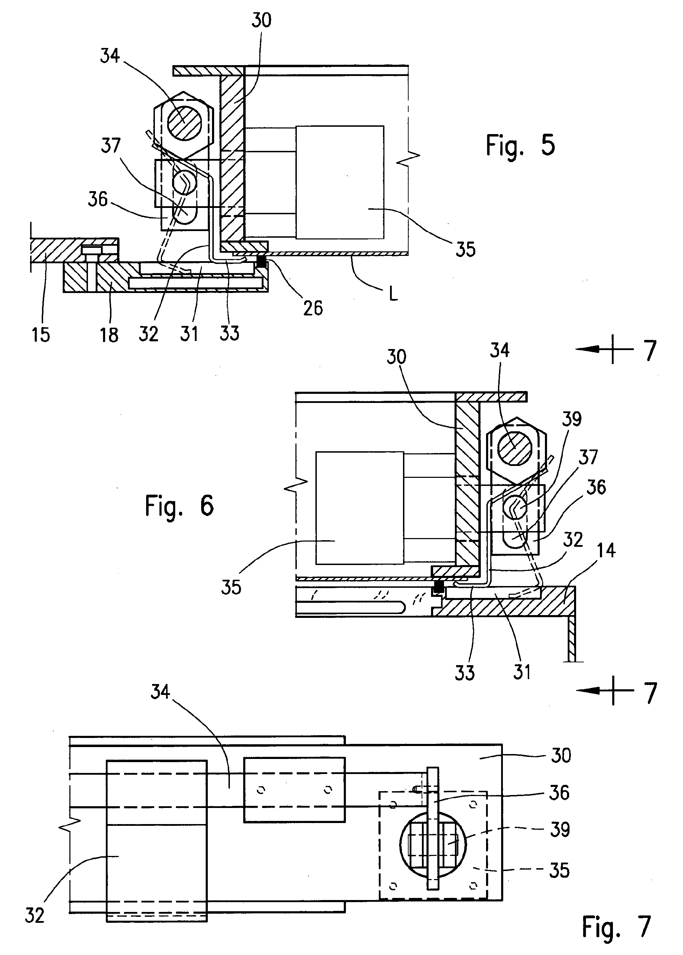

The rear plate 15 is slidably supported along transversal guides 16, whereas the two side plates 13A and 13B are slidably supported by a rear guide, not shown, and by the front bar member 14, coplanar thereto, such as shown in detail in Fig. 6. As the guides of the three plates 13A, 13B and 15 are not required to perform any mechanical connection or structural function between the plates, simple guide slots having a rectangular cross section could be used, instead of the traditional dovetail-shaped slots; thereby, the problems related to thermal expansion and presence of dirt are substantially eliminated or considerably reduced, thus facilitating the sliding and reliability of the whole adjusting system.

As stated above, the cross edges of the window 12 are defined by the side plates 13A and 13B, the front longitudinal edge is defined by the steady front bar member 14, whereas the rear longitudinal edge is defined by a second bar member which may consist of at least one or more bar sections removably fastened to the rear plate 15; according to the example shown, the rear bar member comprises three bar sections 17 and 18 which are removably connected to the rear plate 15, coplanar to the side plates 13A and 13B and the front bar member 14.

Particularly, as shown in Fig. 1 to 4, unlike the front steady bar member 14, the rear bar member consists of three axially-aligned bar sections, which are removably and/or replaceably connected to the fore edge of the rear plate 15; more precisely, the rear bar comprises a central bar section 17 and two side bar sections 18, in which the side bar sections 18 can be slidably engaged with guide slots provided in the plates 13A, 13B and 15.

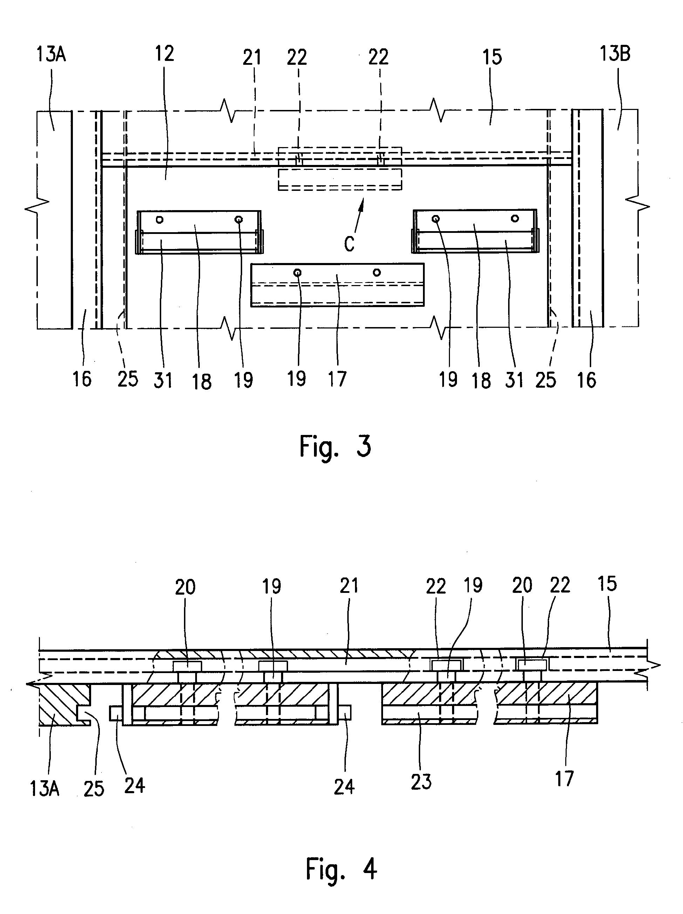

More precisely, as shown in Fig. 3 and 4, the three bar sections 17 and 18, on the upper side have two pins 19 which are screwed in corresponding holes longitudinally spaced apart from each other by a same pitch; each pin 19 is provided with a head 20, Fig. 4, which is configured to be engaged into a downwards opened longitudinal slot 21, having a T shaped cross section at the fore edge of the rear plate 15.

Two short downwards opened cross slots 22 having the same pitch as the pins 20 extend from the longitudinal slot 21 to the fore edge of the rear plate 15, in order to allow for the introduction of the pins 19 and a subsequent sliding movement of the latter along the slot 21.

As schematically shown in Fig. 3, the connection of the three bar sections 17 and 18 to the rear plate 15, can be carried out by firstly assembling the side plates 13A, 13B on the rear plate 15 in a maximum spaced apart condition; accordingly, after the rear plate 15 has been positioned as close to the front bar member 14 as possible, in an easy access condition for an operator, one of the two side bar sections 18 is first assembled in the central position shown in C, by fitting the heads 20 of the locking pins 19 in the two cross slots 22, the pins 19 are then caused to laterally slide along the slot 21 until the first side bar section 18 has been positioned at one end. Next, in the same manner, the second side bar section 18 is assembled at the other end of the rear plate 15; the central bar section 17 is then connected to the cross slots 22; at this stage, when the two side plates 13A and 13B are moved to each other, the bar sections 17 and 18 also are moved to each other and securely connected to the rear plate 15.

To this purpose, as shown in Fig. 4, the central bar section 17 is configured with a longitudinal slot 23 of rectangular cross section; the two side bar sections 18 have, in turn, at each end thereof, a key 24 of rectangular cross section, one of which is intended to penetrate into the slot 23 at one side of the central bar section 17, while the other key 24 is intended to penetrate and slide within a corresponding guide slot 25 which extends along the edge of the corresponding side plate 13A or 13B.

The side plates 13A, 13B, the front bar member 14 and the rear bar sections 17 and 18, on the upper side have an upwardly open longitudinal slot, to provide the housing seat for a seal 26, Fig. 5 and 6, to seal against a sheet of plastic material to be thermoformed.

Preferably, the three bar sections 17, 18 are obtained by simply cutting them at the desired length, from aluminium sections having the same thickness as the side plates 13A, 13B and the front bar member 14. Thereby, no subsequent mechanical processing is required; in addition, both the upper, and the bottom surfaces of the two side plates and of the two bar members are laying in respective upper and lower horizontal planes.

This solution proves to be extremely advantageous, not only because the three bar sections 17, 18 can be assembled and removed by a simple sliding movement after the rear plate 15 has been moved close to the operator side, but because the size of the three bar sections 17, 18 can be standardized on the maximum width of the window 12 as required for the thermoforming plastic sheets of various sizes; accordingly, for variously-sized sheets only the central bar section 17 needs to be replaced with another one having a different length, or as an alternative, every bar section 17 and 18.

While it is generally possible to arrange bar sections 17 and 18 having different lengths, based on the particular size of the plastic sheets to be formed, it is preferred to use side bar sections 18 having a prefixed length, independently of the longitudinal size of the window 12, and each time make use of a central bar section 17 of a length suitable to the size of the sheets to be thermoformed; thereby, the fitting and adjustment operations of the window 12 are extremely simplified, without having to remove and replace the whole plate assembly, while maintaining the general features of the reduction window of the present invention, as previously stated, the rear bar member may consist of at least one bar section, or of two or more axially aligned bar sections extending between the side plates 13A, 13B, providing connection means for removably connecting the bar sections to the rear plate 15.

Fig. 5, 6 and 7 show a further feature of the plate assembly according to the invention, in combination with a sheet-clamping frame 30 of a thermoforming station, in order to sealably press a plastic sheet to be thermoformed against sealing gaskets 16 arranged along the peripheral edges of the window 12.

As is well-known, in machines or thermoforming plants, suitable automatic systems are required for loading individual plastic sheets and removing the thermoformed articles.

Accordingly, the sheet-clamping frame 30 is provided with automated clamping members, at the front steady bar member 14 and the two side bar sections18 of the rear plate 15.

Fig. 5 shows a possible solution for both side bar sections 18, while Fig. 6 shows an identical solution for the front bar member 14. Particularly, as shown in Fig. 5, the sheet-clamping frame 30, the size thereof must correspond to the size of the adjusted reduction window 12 formed by the plate assembly, at a recessed or longitudinal cavity 31 on the upper side of each of the two side bar sections 18, comprises a pivotable clamping member 32 configured with a bottom lifting finger 33, which clamping member 32 is connected to a rotational shaft 34 extending along a rear side of the frame 30. The shaft 34 is operatively connected to an actuator 35, for example a pneumatic cylinder or other actuator type, by a lever 36 provided with a longitudinal slot 37 in which a pin 39 of a rod of the actuator 35 is slidably engaged.

Therefore, by the actuator 35, the clamping member 32 can be angularly rotated between a rearward position, in which the finger 33 protrudes into the cavity 31 in a spaced-apart position relative to an edge of a plastic sheet, and a forward position wherein the finger 33 is arranged below the edge of said sheet.

A similar clamping member is shown in Fig. 6 on a side of the front bar member 14, the same reference numbers being used as in Fig. 5 to designate similar or equivalent parts.

Thereby, by simultaneously operating the four clamping members 32 on the front and rear sides of the sheet-clamping frame 30, a plate can be hold by the frame 30 during the up and/or down movements of the same sheet-clamping frame 30.

The solution proposed herein results to be extremely advantageous in that the thus-configured clamping system does not require any intervention or modification by a user, as the position of the cavities 31 for the clamping fingers, relative to the front bar member 14 and the two side bar sections 18 of the rear plate 15, does not change as the size of the window 12 and sheet-clamping frame 30 is changed.

Fig. 2, 8, 9 and 10 show a further characteristic of the invention, consequent to the above-described plate assembly, and the combined use of the latter with an adjustable table for supporting a mould 40 in a thermoforming station.

As discussed above, one of the characteristics which are distinguishing the plate assembly according to the invention from previously known or currently used plate assemblies, is that the front edge defined by the front bar member 14 is maintained steady as the size of the window 12 is changed, as a result of the sliding movement of the side plates 13A, 13B and rear plate 15. Accordingly, as the size and position of the window 12 are changed, the position of the mould 40 and of the air suction duct for the vacuum required to thermoforming, and/or for feeding the pressurized air suitable for providing an initial pre-stretching bubble for the plate of thermoplastic material are also changed.

In Fig. 2, accordingly, with the reference number 41 a support device for a thermoforming mould 40 has been designated, which can be raised and lowered for example by control cylinders, not shown, to push a base plate 42 of the mould 40, sealably against the bottom surfaces of the front bar member 14, of the side plates 13A, 13B and of the bar sections 17, 18 of the rear bar member.

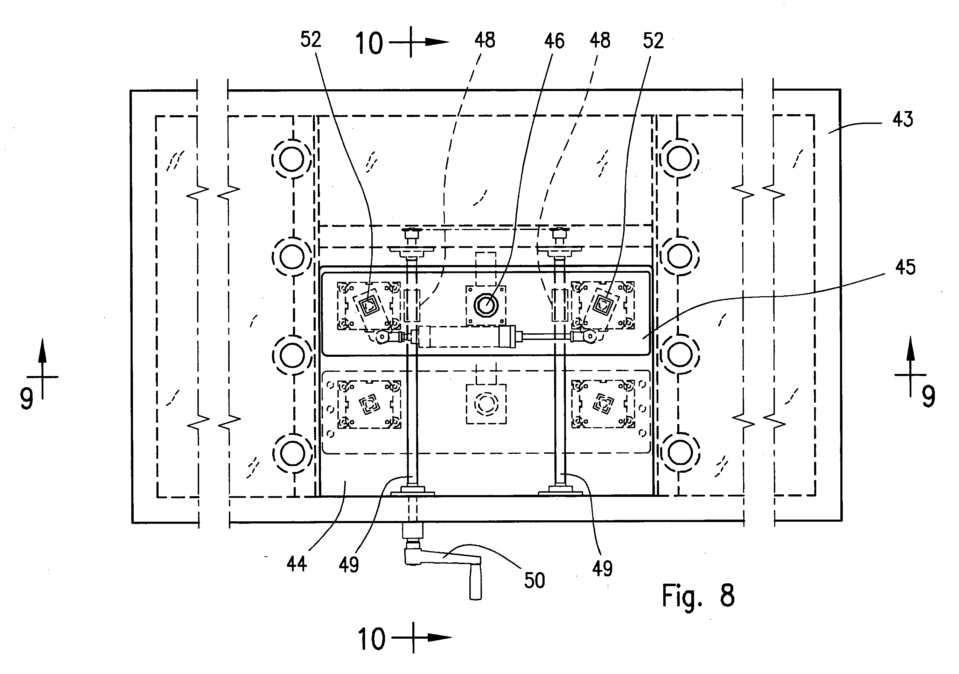

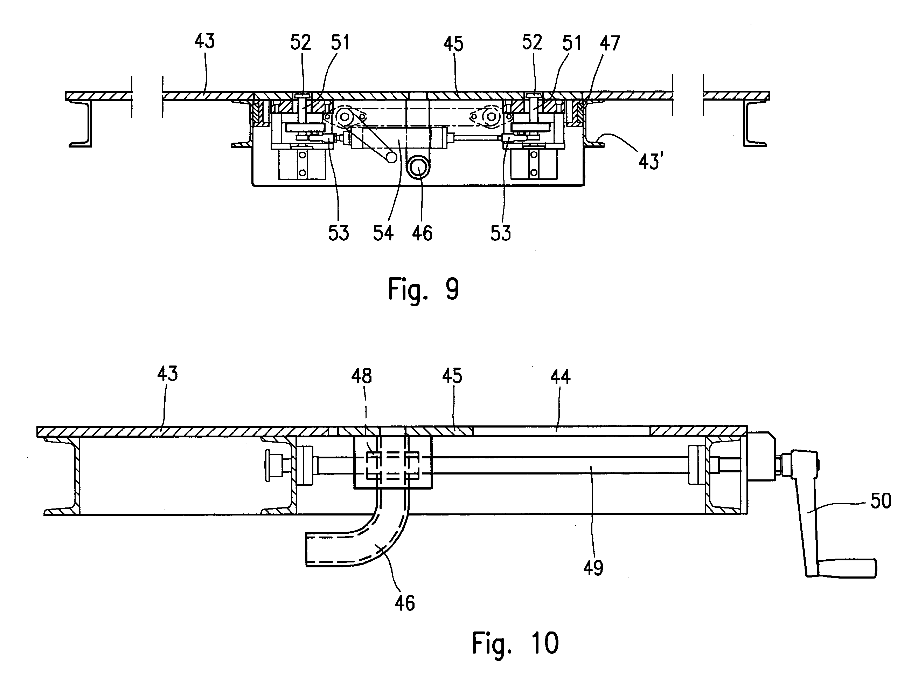

As shown in Fig. 8 and 9, the support device 41 comprises a mould support table 43 configured with a rectangular opening 44 extending to the front edge; at the opening 44, the table 43 comprises a slide 45 to which a duct 46 is fastened which can be connected to an air suction source and/or to a pressured air source, respectively connectable to a corresponding mould duct.

In order that the duct 46 can always axially coincide with the mould duct 41, independently of the position of the same mould on the support table 43, the slide 45 is movably supported in the cross direction of the window 12, between a rear position corresponding to a window 12 of the maximum size, and a completely fore position close to the operator side, as shown in dotted lines, which corresponds to a window 12 of minimum size. The slide 45 move along two side guides 47 which are fastened to a respective intermediate section 43' of the mould support table 43.

The movement in the cross direction of the slide 45, along the guides 47, can be controlled in any suitable manner; for example, in the case of Figs. 8 and 9, the control of the slide 45 is obtained by means of a screw/nutscrew mechanical drive, which can be manually actuated; internally threaded bushings 48 are engaged with two threaded shafts 49 which are operatively connected to each other to rotate in a same direction, for example by a chain transmission 50; one of the two shafts 49, for example the left shaft in Fig. 8, is connected to a crank 50 that can be manually actuated or to any control actuator.

The slide 45 is also provided with a device for locking the mould base plate 42; the locking device comprises for example two pins 51 having a square head 52 suitable to penetrate and be anchored within a matching hole on the bottom side of the mould base 42, by a simple angular rotation. Accordingly, the two pins 51 are connected by a pair of gears and crank 53, to a control actuator, for example to the stem and respectively to the body of a pneumatic cylinder 54.

From what has been said and shown above, it should be understood that a mobile plate assembly has been provided for a reduction window of a thermoforming station, characterized by two side plates, coplanar to a front steady bar, and by a third rear plate provided with one or more removably connectable bar sections, which define coplanar peripheral edge surfaces of an adjustable window for supporting plates of plastic material of different sizes to be thermoformed.

Also according to the invention, a plate assembly has been provided as discussed above, in combination with a sheet-clamping frame provided with clamping members for the plates to be thermoformed, as well as a covering plate assembly for closing a mould housing box in a thermoforming station, in combination with a mobile support table for moulds of different sizes, which can be variously positioned on a support table provided with an adjustment device of air suction and/or pressurized air supply ducts.

The proposed solution results to be extremely advantageous in terms of constructional simplicity, reliability, low cost, mechanical resistance, as it results to be compatible with the existing thermoforming stations, and with all manufacturing requirements.

The rear plate, as described above, can be in an upper or lower position relative to the side plates, by changing in this latter case the position of the rear bar member, which would maintain all the characteristics and advantages obtainable with the present invention.

Accordingly, other modifications and/or variations may be carried out to the plate assembly or a combination thereof with a sheet-clamping frame and/or with a mould support table of a thermoforming station, without departing from the claims.

## Claims

1. A mobile-plate assembly suitable to form an adjustable window (12) for supporting sheets of thermoformable plastic material in a thermoforming station, in which the window (12) comprises a front edge, at an operator side, and a rear edge which extend parallel in a longitudinal direction; and
two cross edges which extend in a right-angled direction to the previous one, further including:
first front steady bar member (14) which extends parallel to the front edge of the window (12);
first (13A) and second (13B) side plates, said side plates (13A, 13B) being slidably supported in the longitudinal direction of the window (12), coplanar to the first front steady bar member (14); and
a rear plate (15) slidably supported in the cross direction, on a plane parallel to the side plates (13A, 13B), in which the rear plate (15) is provided with a rear bar member (17, 18) which extends parallel to the rear edge of the window (12) and
which is removably connected to the rear plate (15), **CHARACTERISED IN THAT** said rear bar member (17, 18) with the front bar member (14) and the side plates (13A, 13B) define coplanar peripheral edge surfaces of said adjustable window (12).

2. The mobile-plate assembly according to claim 1, **characterised in that** the rear bar member (17, 18) comprises at least one bar section extending between the side plates (13A, 13B).

3. The mobile-plate assembly according to claim 2, **characterised in that** the rear bar section (17, 18) comprises a central bar section (17) and two side bar section axially aligned to the central bar section (13) of the rear plate (15).

4. The mobile-plate assembly according to claim 3, **characterised in that** the side bar sections (18) are sliding along a longitudinal slot (21) of the rear plate (15), and in cross guide slots (25) along an edge of the side plates (13A, 13B).

5. The mobile-plate assembly according to claim 3, **characterised in that** the central bar section (17) and/or side bar sections (18), are replaceable with bar sections (17, 18) of different dimensions.

6. The mobile-plate assembly according to claim 4, **characterised in that** said bar sections (17, 18) are conformed with a groove and tongue joint.

7. The mobile-plate assembly according to claim 1, **characterised in that** the rear plate (15) is sliding from a totally backward position, to a totally forward position in respect to the front bar member (14).

8. The mobile-plate assembly according to any one of claims 1 to 7, in combination with a sheet-clamping frame (30) positioned above, **characterised in that** the front bar member (14) and the rear bar member (17, 18) has an upper longitudinal cavity (31), and **in that** the sheet-clamping frame (30), in positions corresponding to said cavities (31) of the front bar member (14), and said rear bar member (17, 18) comprises rotatable lifting members (33) for the sheets in plastic material to be thermoformed, which extend into said cavity (31), and control means (35) to angularly rotate said lifting members (33) between a backward disengagement position and a forward engagement position in respect to an edge of thermoformable plastic sheet.

9. The mobile-plate assembly according to any one of claims 1 to 8, in combination with a mould support table (43) positioned underneath the plate assembly (13A, 13B, 15), **characterised by** comprising a locking system (51, 54) for the attachment of a mould (40), and a duct (46) for connection of the mould (40) to an air suction source and/or to a pressured air source, provided on a slide (45) movably supported by the mould support table (43) in a cross direction to the plate assembly, parallely to the rear plate (15).

10. The mobile-plate assembly according to claim 9, **characterised in that** the mould support table (43) is housed in a vacuum-sealed box (10).

11. The mobile-plate assembly according to claims 9 and/or 8, in which the mould support table (43) is vertically mobile between a lower position and an upper position against the mobile plate assembly (13A, 13B, 15), **characterised in that** the bottom surfaces of the side plates (13A, 13B), respectively of the front steady bar member (14), and the rear bar member (17, 18) of the rear plate (15) are defining a bearing and sealing surface for the mould support table (43) in the upper position of the mould (40).

## Patentansprüche

1. Anordnung beweglicher Platten, die dafür geeignet ist, ein verstellbares Fenster (12) zum Stützen von Bögen aus warmverformbarem Kunststoffmaterial in einer Warmverformungsstation zu bilden, wobei das Fenster (12) einen vorderen Rand auf einer Bedienerseite und einen hinteren Rand umfasst, die sich in einer Längsrichtung parallel erstrecken; und
zwei Querränder, die sich in einer rechtwinkligen Richtung zur vorherigen erstrecken, weiter umfassend:
ein erstes vorderes stationäres Stangenelement (14), das sich parallel zum vorderen Rand des Fensters (12) erstreckt;
eine erste (13A) und eine zweite (13B) seitliche Platte, wobei die seitlichen Platten (13A, 13B) gleitfähig in der Längsrichtung des Fensters (12), koplanar zu dem ersten vorderen stationären Stangenelement (14) gestützt werden; und
eine hintere Platte (15), die gleitfähig in der Querrichtung auf einer Ebene parallel zu den seitlichen Platten (13A, 13B) gestützt wird, wobei die hintere Platte (15) mit einem hinteren Stangenelement (17, 18) versehen ist, das sich parallel zum hinteren Rand des Fensters (12) erstreckt und
das abnehmbar mit der hinteren Platte (15) verbunden ist, **DADURCH GEKENNZEICHNET, dass** das hintere Stangenelement (17, 18) mit dem vorderen Stangenelement (14) und den seitlichen Platten (13A, 13B) koplanare Umfangsrandflächen des verstellbaren Fensters (12) definiert.

2. Anordnung beweglicher Platten nach Anspruch 1, **dadurch gekennzeichnet, dass** das hintere Stangenelement (17, 18) mindestens einen Stangenabschnitt umfasst, der sich zwischen den seitlichen Platten (13A, 13B) erstreckt.

3. Anordnung beweglicher Platten nach Anspruch 2, **dadurch gekennzeichnet, dass** der hintere Stangenabschnitt (17, 18) einen mittleren Stangenabschnitt (17) und zwei axial auf den mittleren Stangenabschnitt (13) der hinteren Platte (15) ausgerichtete seitliche Stangenabschnitte umfasst.

4. Anordnung beweglicher Platten nach Anspruch 3, **dadurch gekennzeichnet, dass** die seitlichen Stangenabschnitte (18) entlang einem Längsschlitz (21) der hinteren Platte (15) und in Querführungsschlitzen (25) entlang einem Rand der seitlichen Platten (13A, 13B) gleiten.

5. Anordnung beweglicher Platten nach Anspruch 3, **dadurch gekennzeichnet, dass** der mittlere Stangenabschnitt (17) und/oder die seitlichen Stangenabschnitte (18) durch Stangenabschnitte (17, 18) anderer Abmessungen ersetzt werden können.

6. Anordnung beweglicher Platten nach Anspruch 4, **dadurch gekennzeichnet, dass** die Stangenabschnitte (17, 18) mit einer Nut- und Federverbindung ausgebildet sind.

7. Anordnung beweglicher Platten nach Anspruch 1, **dadurch gekennzeichnet, dass** die hintere Platte (15) in Bezug auf das vordere Stangenelement (14) aus einer ganz hinten liegenden Position zu einer ganz vorne liegenden Position gleitet.

8. Anordnung beweglicher Platten nach einem der Ansprüche 1 bis 7 in Kombination mit einem darüber positionierten Bogenklemmrahmen (30), **dadurch gekennzeichnet, dass** das vordere Stangenelement (14) bzw. das hintere Stangenelement (17, 18) einen oberen Längshohlraum (31) aufweist und dass der Bogenklemmrahmen (30) an Positionen, die den Hohlräumen (31) des vorderen Stangenelements (14) und des hinteren Stangenelements (17, 18) entsprechen, drehbare Hebeelemente (33) für die Bögen aus Kunststoffmaterial, die warmverformt werden sollen, umfasst, die sich in den Hohlraum (31) erstrecken, und Steuermittel (35) umfasst, um die Hebeelemente (33) in Bezug auf einen Rand eines warmverformbaren Kunststoffbogens zwischen einer hinteren Löseposition und einer vorderen Eingriffsposition winklig zu drehen.

9. Anordnung beweglicher Platten nach einem der Ansprüche 1 bis 8 in Kombination mit einem Formwerkzeug-Stütztisch (43), der unter der Plattenanordnung (13A, 13B, 15) positioniert ist, **dadurch gekennzeichnet, dass** sie ein Verriegelungssystem (51, 54) zum Anbringen eines Formwerkzeugs (40) und eine Leitung (46) zum Anschließen des Formwerkzeugs (40) an einer Luftsaugquelle und/oder an einer Druckluftquelle umfasst, bereitgestellt auf einem Schlitten (45), der von dem Formwerkzeug-Stütztisch (43) in einer Querrichtung zu der Plattenanordnung parallel zu der hinteren Platte (15) bewegbar gestützt wird.

10. Anordnung beweglicher Platten nach Anspruch 9, **dadurch gekennzeichnet, dass** der Formwerkzeug-Stütztisch (43) in einem vakuumdichten Kasten (10) untergebracht ist.

11. Anordnung beweglicher Platten nach Ansprüchen 9 und/oder 8, wobei der Formwerkzeug-Stütztisch (43) vertikal zwischen einer unteren Position und einer oberen Position gegen die Anordnung beweglicher Platten (13A, 13B, 15) beweglich ist, **dadurch gekennzeichnet, dass** die Unterseiten der seitlichen Platten (13A, 13B) bzw. des vorderen stationären Stangenelements (14) und des hinteren Stangenelements (17, 18) der hinteren Platte (15) eine Lager- und Dichtfläche für den Formwerkzeug-Stütztisch (43) in der oberen Position des Formwerkzeugs (40) definieren.

## Revendications

1. Ensemble de plaques mobiles convenant pour former une fenêtre ajustable (12) pour supporter des feuilles d'une matière plastique thermoformable dans un poste de thermoformage, dans lequel la fenêtre (12) comprend un bord avant, du côté d'un opérateur, et un bord arrière qui s'étend parallèlement dans une direction longitudinale; et
deux bords transversaux qui s'étendent à angles droits avec le bord précédent, comprenant par ailleurs:
un premier élément de barre stable avant (14) qui s'étend parallèlement au bord avant de la fenêtre (12);
une première (13A) et une seconde (13B) plaque latérale, lesdites plaques latérales (13A, 13B) étant supportées à coulissement dans la direction longitudinale de la fenêtre (12), coplanaires avec le premier élément de barre stable avant (14); et
une plaque arrière (15) supportée à coulissement dans la direction transversale, sur un plan parallèle aux plaques latérales (13A, 13B), dans lequel la plaque arrière (15) est pourvue d'un élément de barre arrière (17, 18) qui s'étend parallèlement au bord arrière de la fenêtre (12) et
qui est raccordé de manière amovible à la plaque arrière (15), **caractérisé en ce que** ledit élément de barre arrière (17, 18) avec l'élément de barre avant (14) et les plaques latérales (13A, 13B) définissent des surfaces de bord périphériques coplanaires de ladite fenêtre ajustable (12).

2. Ensemble de plaques mobiles selon la revendication 1, **caractérisé en ce que** l'élément de barre arrière (17, 18) comprend au moins une section de barre s'étendant entre les plaques latérales (13A, 13B).

3. Ensemble de plaques mobiles selon la revendication 2, **caractérisé en ce que** la section de barre arrière (17, 18) comprend une section de barre centrale (17) et deux sections de barre latérales alignées axialement avec la section de barre centrale (13) de la plaque arrière (15).

4. Ensemble de plaques mobiles selon la revendication 3, **caractérisé en ce que** les sections de barre latérales (18) coulissent le long d'une fente longitudinale (21) de la plaque arrière (15) et dans des rainures de guidage transversales (25) le long d'un bord des plaques latérales (13A, 13B).

5. Ensemble de plaques mobiles selon la revendication 3, **caractérisé en ce que** la section de barre centrale (17) et/ou les sections de barre latérales (18) peuvent être remplacées par des sections de barre (17, 18) de différentes dimensions.

6. Ensemble de plaques mobiles selon la revendication 4, **caractérisé en ce que** lesdites sections de barre (17, 18) sont conformées avec une jonction à rainure et languette.

7. Ensemble de plaques mobiles selon la revendication 1, **caractérisé en ce que** la plaque arrière (15) coulisse d'une position totalement à l'arrière à une position totalement à l'avant par rapport à l'élément de barre avant (14).

8. Ensemble de plaques mobiles selon l'une quelconque des revendications 1 à 7, en combinaison avec un châssis de serrage de feuille (30) positionné par-dessus, **caractérisé en ce que** l'élément de barre avant (14) et l'élément de barre arrière (17, 18) ont une cavité longitudinale supérieure (31) et **en ce que** le châssis de serrage de feuille (30), dans des positions correspondant auxdites cavités (31) de l'élément de barre avant (14) et dudit élément de barre arrière (17, 18) comprend des éléments de levage rotatifs (33) pour les feuilles de matière plastique thermoformées, qui s'étendent dans ladite cavité (31), et des moyens de commande (35) pour faire tourner selon un certain angle lesdits éléments de levage (33) entre une position de dégagement arrière et une position d'engagement avant par rapport à un bord de la feuille de plastique thermoformable.

9. Ensemble de plaques mobiles selon l'une quelconque des revendications 1 à 8, en combinaison avec une table de support de moule (43) positionnée en dessous de l'ensemble de plaques (13A, 13B, 15), **caractérisé en ce qu'**il comprend un système de verrouillage (51, 54) pour la fixation d'un moule (40) et un conduit (46) pour raccorder le moule (40) à une source d'aspiration d'air et/ou à une source d'air sous pression, aménagée sur un curseur (45) supporté de manière mobile par la table de support de moule (43) dans une direction transversale à l'ensemble de plaques, parallèlement à la plaque arrière (15).

10. Ensemble de plaques mobiles selon la revendication 9, **caractérisé en ce que** la table de support de moule (43) est logée dans un caisson (10) scellé sous vide.

11. Ensemble de plaques mobiles selon les revendications 9 et/ou 8, dans lequel la table de support de moule (43) est mobile verticalement entre une position inférieure et une position supérieure contre l'ensemble de plaques mobiles (13A, 13B, 15), **caractérisé en ce que** les surfaces inférieures des plaques latérales (13A, 13B), respectivement, de l'élément de barre stable avant (14) et de l'élément de barre arrière (17, 18) de la plaque arrière (15) définissent une surface de support et de scellage pour la table de support de moule (43) dans la position supérieure du moule (40).
